# EUROPÄISCHE PATENTSCHRIFT

(11) **EP 3 501 250 B1**
(45) Veröffentlichungstag und Bekanntmachung des Hinweises auf die Patenterteilung: **11.11.2020**
(21) Anmeldenummer: 18213737.2
(22) Anmeldetag: 18.12.2018
(51) Int. Cl.: A01C 7/08, A01B 79/00, A01C 7/10

(54) **LANDWIRTSCHAFTLICHE VERTEILMASCHINE UND VERFAHREN ZUR EINZELREIHEN- UND GRUPPENSCHALTUNG EINER SOLCHEN LANDWIRTSCHAFTLICHEN VERTEILMASCHINE**
AGRICULTURAL DISTRIBUTOR AND METHOD FOR INDIVIDUAL ROW AND GROUP CONTROL OF SUCH AN AGRICULTURAL DISTRIBUTOR
ÉPANDEUR AGRICOLE ET PROCÉDÉ DE COMMANDE DE RANGÉE SIMPLE ET GROUPÉE D'UN TEL ÉPANDEUR AGRICOLE

(30) Priorität: 23.12.2017 DE 102017223789
(43) Veröffentlichungstag der Anmeldung: 26.06.2019
(73) Patentinhaber: Horsch Maschinen GmbH, 92421 Schwandorf (DE)
(72) Erfinder: HORSCH, Philipp, 92421 Schwandorf (DE)
(74) Vertreter: Benninger, Johannes

(56) Entgegenhaltungen:
- WO-A1-2017/055266
- US-B2- 9 580 256
- US-B2- 9 609 803

## Beschreibung

Die vorliegende Erfindung betrifft ein Verfahren zur Einzelreihen- und/oder Gruppenschaltung einer landwirtschaftlichen Verteilmaschine mit den Merkmalen des Oberbegriffs unabhängigen Verfahrensanspruchs 1. Die Erfindung betrifft zudem eine landwirtschaftliche Verteilmaschine mit einer Mehrzahl von einzeln und/oder in Gruppen aktivierbaren und/oder deaktivierbaren Reiheneinheiten zur gesteuerten Ausbringung von granulatartigem Verteilgut mit den Merkmalen des Oberbegriffs des unabhängigen Anspruchs 9.

In der Landtechnik werden die unterschiedlichsten Maschinen zum Ausbringen und Verteilen von landwirtschaftlichen Verteilgütern wie Saatgut, Dünger oder dergl. eingesetzt. Bei einer bevorzugten Ausführungsform wird das granulatartige Verteilgut in einem Vorratsbehälter der Maschine mitgeführt und bereitgestellt, so dass das Verteilgut anschließend mittels geeigneten Dosiervorrichtungen einem Luftvolumenstrom beigemischt werden kann, der in der Regel von einem Gebläse erzeugt wird. Auf diese Weise ist ein Verteilgut-Luftvolumenstrom gebildet, der zu einer geeigneten Verzweigungsstelle wie bspw. einem Verteilerturm befördert werden kann. Der Verzweigungsstelle bzw. dem Verteilerturm ist in aller Regel ein kreisförmiger Verteilerkopf zugeordnet, an dessen Umfang sich eine Mehrzahl von Abgängen befindet. Im Verteilerkopf wird der zunächst einheitliche Verteilgut-Luftvolumenstrom in eine Mehrzahl von Teilströmen entsprechend der Anzahl an Abgängen bzw. zu versorgenden Reihen aufgeteilt, so dass das Verteilgut mittels Saatleitungen zu einer Vielzahl von nachgeordneten Reiheneinheiten bzw. Ausbringvorrichtungen wie Säscharen oder dergl. weiter geleitet werden kann. Um eine möglichst gleichmäßige Verteilung des Verteilguts an allen Abgängen bzw. Ausbringeinrichtungen zu erreichen, muss der Verteilerturm bzw. der Verteilerkopf eine möglichst konstante Querverteilung bzw. einen möglichst geringen Variationskoeffizienten an den einzelnen Abgängen aufweisen. D.h. das Verteilgut sollte im Idealfall im Verteilerkopf möglichst gleichmäßig über alle Abgänge verteilt werden. In der Regel ist die Querverteilung gleichmäßiger, je konstanter die Luftvolumenströme, die Drücke sowie die Strömungsgeschwindigkeiten im Verteilerturm, im Verteilerkopf und in den Abgängen sind.

In der Regel wird Verteilgut in alle Abgänge bzw. Reihen gefördert. Es kann jedoch erforderlich sein, einzelne Abgänge des Verteilerkopfes abzusperren bzw. in diesen die Verteilgutförderung zu unterbinden, bspw. um sog. Fahrgassen anzulegen oder um eine Überlappung der Verteilgutausbringung mit bereits bearbeiteten Bereichen einer Ackerfläche zu vermeiden, was teilweise auch als "Section Control" oder als "Row Control" bezeichnet wird.

Systeme, um einzelne Abgänge abschalten zu können bzw. um den Verteilgut-Luftvolumenstrom umlenken zu können, sind bereits in verschiedensten Ausführungsvarianten bekannt, bspw. durch die EP 2 462 795 A2 oder die EP 0 799 560 A2 oder durch die EP 2 695 508 A1. Diesen aus dem Stand der Technik bekannten Systemen bzw. Verteilertürmen, die jeweils mit der Möglichkeit ausgestattet sind, einzelne Abgänge abschalten zu können bzw. den Verteilgut-Luftvolumenstrom jeweils umlenken zu können, ist gemeinsam, dass diese Abschaltung jeweils mittels einer Weiche in Form einer Klappe oder mittels eines Schiebers erfolgt.

Nicht alle bekannten Systeme können den aktuellen Anforderungen nach kurzen Reaktionszeiten beim Öffnen oder Verschließen der jeweils eingesetzten Weichen oder Schieber genügen. Diese schnellen Umschaltvorgänge sind jedoch unverzichtbar, um eine möglichst effektive Fahrgassenschaltung (sog. "Section Control System") zu ermöglichen. Bei einer solchen schnell reagierenden Fahrgassenschaltung sollen einzelne Abgänge innerhalb kurzer Reaktionszeiten zwischen einer geöffneten und einer geschlossenen Position bewegbar sein. Dies ist insbesondere bei hohen Fahrgeschwindigkeit erforderlich.

Die WO 2017 055 266 A1 offenbart einen Verteilerturm einer landwirtschaftlichen Verteilmaschine und ein Verfahren zur Reihenabschaltung an einem solchen Verteilerturm. Das dort offenbarte Verfahren kann insbesondere für eine Einzelreihenabschaltung eines Verteilerturms einer landwirtschaftlichen Verteilmaschine zum Ausbringen von granulatartigem Verteilgut, wie Saatgut, Dünger oder dergl. mit den für ein zuverlässig arbeitendes "Section Control System" notwendigen kurzen Schaltzeiten eingesetzt werden. Der Verteilerturm umfasst ein Steigrohr zum Zuführen des Verteilguts zu einem an das Steigrohr oberseitig anschließenden ringförmigen Verteilerkopf, mit dem der Verteilgut-Luftvolumenstroms in eine Vielzahl von Verteilgut-Teil-Luftvolumenströmen aufgeteilt wird, wobei die Teil-Luftvolumenströme in über den Umfang des Verteilerkopfes verteilte Abgänge oder Reihen aufgeteilt werden. Jedem dieser Abgänge ist eine Absperrvorrichtung mit einer Weiche zugeordnet, wobei diese Weiche den Verteilgut-Luftvolumenstrom je nach Schaltstellung in Richtung eines Saatleitungsanschlusses oder in Richtung eines Rückführbereichs leitet. Weiterhin kann vorgesehen sein, dass ein Bypass eine pneumatische Verbindung zwischen dem Rückführbereich und dem Saatleitungsanschluss herstellt.

Somit liefert der Stand der Technik sog. "Section Control Systeme" mit der jeweiligen Möglichkeit, Einzelreihen bei den hierbei verwendeten landwirtschaftlichen Verteilmaschinen wie bspw. Sämaschinen abzuschalten, ohne dass hierdurch eine nennenswerte Verschlechterung der Querverteilung verursacht wird. Um eine ausreichend konstante Querverteilung zu gewährleisten, kann es zudem sinnvoll sein, bei der Abschaltung mehrerer Einzelreihen einer solchen landwirtschaftlichen Verteilmaschine für eine proportionale Reduzierung der mittels der Dosiervorrichtung dem Verteilgut-Luftvolumenstrom zudosierten Menge an Verteilgut zu sorgen. Die in der Praxis eingesetzten Dosiervorrichtungen müssen allerdings in einem Arbeitsbereich betrieben werden, der obere und untere Grenzen der jeweils pro Zeiteinheit realisierbaren Mengen an zudosierbarem Verteilgut definiert.

Durch die US 9 609 803 B2 ist eine weitere Verteilmaschine offenbart, bei welcher mittels eines pneumatischen Verteilsystems eine bestimmte Menge an Verteilgut aus einem Vorratsbehälter entnommen und zu einzelnen Reiheneinheiten transportiert wird. Die Reiheneinheiten werden durch einen "controller" angesteuert, so dass deren Ausbringmenge bzw. Ausbringrate geregelt werden kann. Die Reiheneinheiten können bspw. derart angesteuert werden, dass jede Reiheneinheit in bestimmten Feldbereichen 100 % an Verteilgut ausgibt, während definierte Reiheneinheiten in definierten Überlappungsbereichen zunächst 1 % an Verteilgut und bei erneuter Fahrt in diesen Überlappungsbereichen 99 % an Verteilgut ausgeben.

Durch die US 9 580 256 B2 ist eine weitere Verteilmaschine offenbart, bei welcher mittels einer Dosiereinheit eine bestimmte Menge an Verteilgut aus dem Vorratsbehälter entnommen wird. Das entnommene Verteilgut wird über Leitungen zu mehreren Verteilabschnitten transportiert und dort über Reiheneinheiten ausgegeben. Die einzelnen Verteilabschnitte können beliebig aktiviert und deaktiviert werden, wobei in Abhängigkeit von den aktivierten bzw. deaktivierten Verteilabschnitten die Geschwindigkeit der Dosiereinheit eingestellt wird.

Angesichts der konstruktiv vorgegebenen Grenzen der in der Praxis eingesetzten Verteilmaschinen liegt der vorliegenden Erfindung die Aufgabe zugrunde, ein optimiertes Steuerungs- und/oder Regelverfahren zum Betrieb einer landwirtschaftlichen Verteilmaschine zu liefern, das dafür sorgen kann, dass die Verteilmaschine unter allen auftretenden Betriebsbedingungen innerhalb ihrer Betriebsgrenzen betrieben werden kann, so dass jeweils eine optimale Ausbringqualität gewährleistet werden kann. Zudem soll mit der vorliegenden Erfindung eine entsprechend betreibbare landwirtschaftliche Verteilmaschine zur Verfügung gestellt werden.

Die solchermaßen definierten Ziele werden mit den Gegenständen der unabhängigen Ansprüche erreicht. Merkmale vorteilhafter Weiterbildungen der Erfindung finden sich in den jeweiligen abhängigen Ansprüchen.

Zur Erreichung der genannten Ziele schlägt die Erfindung zunächst ein Verfahren zur Einzelreihen- und/oder Gruppenschaltung einer landwirtschaftlichen Verteilmaschine vor, wobei diese Verteilmaschine eine Mehrzahl von einzeln und/oder in Gruppen aktivierbaren und/oder deaktivierbaren Reiheneinheiten zur gesteuerten Ausbringung von granulatartigem Verteilgut wie Saatgut oder Dünger aufweist. Die Reiheneinheiten werden jeweils von mindestens einem Vorratsbehälter mit darin befindlichem Verteilgut mittels einer zwischen dem mindestens einen Vorratsbehälter und den Reiheneinheiten angeordneten und hinsichtlich ihrer Fördermenge an Verteilgut je Zeiteinheit steuer- und/oder regelbaren Dosier- und/oder Fördereinrichtung gespeist. Weiterhin ist bei dem Verfahren vorgesehen, dass die mindestens eine Fördereinrichtung innerhalb eines definierbaren und/oder veränderlichen Betriebsbereiches zwischen einer unteren Grenzfördermenge und einer oberen Grenzfördermenge arbeitet, wobei zudem eine Gesamtfördermenge der Fördereinrichtung bei allen aktivierten Reiheneinheiten kleiner oder in etwa gleich der oberen Grenzfördermenge ist, und wobei die von der steuer- und/oder regelbaren Dosier- und/oder Fördereinrichtung geförderte Fördermenge an Verteilgut in Abhängigkeit von der jeweiligen Anzahl an aktivierten oder deaktivierten Reiheneinheiten erhöht oder reduziert werden kann.

Die Aufteilung des Gesamtförderstroms, bei dem in aller Regel eine Luftströmung als Trägermedium für das zudosierte Verteilgut fungiert, in eine der Anzahl an zu versorgenden Reiheneinheiten entsprechende Anzahl von Teilströmen kann bspw. mittels eines an sich bekannten Verteilerturms erfolgen, wie er etwa aus der WO 2017 055 266 A1 oder aus anderen Dokumenten bekannt ist. Ein solcher bekannter Verteilerturm ermöglicht es, durch Absperren oder Freigeben der einzelnen Abgänge oder Ausgänge mittels Klappen, Kugelventilen oder anderen Ventilvarianten, bedarfsweise die einzelnen Leitungen zu den Reiheneinheiten separat zu aktivieren oder zu deaktivieren und dadurch die Reiheneinheiten bedarfsweise mit Verteilgut zu versorgen oder zu deaktivieren. Es sei an dieser Stelle darauf hingewiesen, dass für die Aufteilung des Gesamtförderstroms in die jeweils benötigte Anzahl von Teilförderströmen nicht nur derartige Verteilertürme in Frage kommen, wie sie seit längerer Zeit von pneumatisch arbeitenden Drillsaat-Maschinen bekannt sind. Wahlweise können auch zwei oder mehr parallele Verteilertürme mit oben liegenden und unten liegenden Verteilerköpfen eingesetzt werden. Daneben sind auch Verteileinrichtungen bzw. Verzweigungsstellen mit horizontal liegenden Zentralrohren und flach liegenden Verteilerköpfen bekannt, die sich ebenfalls für den hier benötigten Zweck eignen können.

Wenn im vorliegenden Zusammenhang von Reiheneinheiten die Rede ist, so sind damit insbesondere die bodennahen Ausbringeinheiten gemeint, mit denen das Verteilgut unmittelbar in den Boden eingebracht wird. Diese Ausbringeinheiten können bspw. durch Einzelkorndosiereinheiten oder durch Drillsaateinheiten o. dgl. gebildet sein, die je nach gewählter Ausstattung bspw. mit Scheibenscharen, Zinkenscharen, Zustreichern, Andruckrollen oder anderen geeigneten Eingriffs- und/oder Bodenbehandlungswerkzeugen zur Bodenbearbeitung im Zusammenhang mit der Ablage von Verteilgut wie Saatgut, Dünger etc. ausgestattet sein können.

Das erfindungsgemäße Verfahren sieht vor, dass bei allen Schaltvorgängen, d.h. bei der Aktivierung oder Deaktivierung der Verteilgutversorgung einzelner oder mehrerer Reiheneinheiten, auch immer die Betriebsgrenzen der Dosier- und/oder Fördereinrichtung beachtet werden, insbesondere indem eine Mindestanzahl an aktiviert bleibenden Reiheneinheiten auf die jeweilige untere Grenzfördermenge abgestimmt wird. Gleichzeitig sieht das Verfahren vor, dass bei einer Erreichung und/oder Unterschreitung der unteren Grenzfördermenge entweder alle verbleibenden Reiheneinheiten mitsamt der Dosier- und/oder Fördereinrichtung abgeschaltet werden, oder dass andernfalls die Abschaltung weiterer Reiheneinheiten unterbunden wird und die für eine Erreichung oder Aufrechterhaltung der unteren Grenzfördermenge erforderliche Mindestzahl an Reiheneinheiten aktiviert bleiben. Auf diese Weise kann sichergestellt werden, dass die untere Grenzfördermenge, die durch konstruktive Gegebenheiten oder durch Aspekte der jeweiligen Auslegung bzw. Dimensionierung der landwirtschaftlichen Verteilmaschine vorgegeben ist, bei allen Regel- und/oder Steuervorgängen, bei denen einzelne oder mehrere Reiheneinheiten aktiviert oder deaktiviert werden, als überlagerte Randbedingung beachtet wird. Wenn somit bei bereits zahlreichen deaktivierten Reiheneinheiten und einer relativ geringen verbleibenden Fördermenge der Dosier- und/oder Fördereinrichtung, die sich bereits der unteren Grenzfördermenge nähert, weitere Reiheneinheiten abgeschaltet werden sollen, wird dies nur dann zugelassen, wenn dabei die untere Grenzfördermenge nicht unterschritten wird. Sollen dennoch weitere Reiheneinheiten deaktiviert werden, so sieht das Verfahren ggf. eine Abschaltung aller verbleibenden Reiheneinheiten sowie einen Förderstopp der Dosier- und/oder Fördereinrichtung vor, um diese nicht außerhalb ihres sinnvollen Betriebsbereiches betreiben zu müssen, was unter Umständen zu einer schlechten Korndosierung in den Förderluftstrom oder gar zu einer Betriebsstörung der Dosier- und/oder Fördereinrichtung führen könnte, wenn diese bspw. zu einem ungewollten Stillstand kommt.

Um etwa eine gewünschte Menge an Verteilgut aus einem Vorratsbehälter zu entnehmen bzw. dem Förderluftstrom zuzudosieren, muss in die Dosier- und/oder Fördereinrichtung z.B. ein passender Zellenrotor oder ein anderes geeignetes Dosierelement eingelegt werden. Unterschiedlich dimensionierte Zellenrotoren weisen insbesondere verschieden große Öffnungen bzw. Zellen an ihrem jeweiligen Umfang auf, so dass jeweils je Umdrehung unterschiedliche Mengen an Verteilgut aus dem Vorratstank in den Luftstrom der Verteilmaschine abgegeben werden. Wahlweise können unterschiedliche Zellenrotoren auch jeweils unterschiedliche Anzahlen von über ihrem Umfang verteilte Zellen aufweisen, so dass ggf. ein Zellenrotor mit mehr Zellen im Bereich der unteren Grenzfördermenge mit geringerer Rotationsgeschwindigkeit betreibbar sein kann als ein Zellenrotor mit insgesamt weniger Zellen.

Da solche Zellenrotoren bspw. mit einem Elektromotor oder mit einem Hydraulikmotor angetrieben werden, muss für jeden Zellenrotor ein sinnvoller Drehzahlbereich definiert sein, der den Betriebsbereich der Dosier- und/oder Fördereinrichtung definiert. So kann bspw. der sinnvolle Drehzahlbereich des Zellenrotors zwischen etwa 15 und etwa 60 Umdrehungen je Minute liegen, wobei hierfür auch andere Drehzahlbereiche denkbar bzw. vorstellbar sind. Insbesondere bei einem Antrieb mittels eines Elektromotors muss jedoch die Drehzahl immer einen bestimmten Mindestwert aufweisen, da ansonsten ein erforderliches Drehmoment zum Antrieb des Zellenrotors nicht mehr erreicht wird. Zudem ist bei einer zu großen oder zu kleinen Drehzahl nicht mehr zu gewährleisten, dass alle Öffnungen bzw. Zellen des Zellenrotors gleichmäßig mit Saatgut gefüllt werden können, wodurch somit wiederum die Gleichmäßigkeit der Verteilung nicht mehr gewährleistet werden kann.

Eine bevorzugte Verfahrensvariante kann vorsehen, dass bei jeder Variation der mittels der steuer- und/oder regelbaren Dosier- und/oder Fördereinrichtung erhöhbaren oder reduzierbaren Fördermenge an Verteilgut im Zusammenhang mit einer Veränderung der jeweiligen Anzahl an aktivierten bzw. deaktivierten Reiheneinheiten die untere Grenzfördermenge einen Mindestwert größer als Null annimmt. Je nach gewählter Antriebsvariante für die Dosier- und/oder Fördereinrichtung - gebildet bspw. durch einen Zellenrotor oder durch ein vergleichbares rotierendes Förderelement, wie oben bereits dargestellt - kann die Fördermenge nicht unterhalb einer bauartbedingten unteren Grenzfördermenge liegen; diese hängt von der Mindestdrehzahl des Zellenrades und/oder von dem jeweils verwendeten Zellenrad sowie von dem hierfür verwendeten rotatorischen Antrieb ab.

Außerdem kann bei dem Verfahren vorgesehen sein, dass die Variation der mittels der steuer- und/oder regelbaren Dosier- und/oder Fördereinrichtung erhöhbaren oder reduzierbaren Fördermenge an Verteilgut im Zusammenhang mit einer Veränderung und/oder einem Austausch eines der Dosier- und/oder Fördereinrichtung zugeordneten rotierenden Dosierorgans oder Dosierelements - dies kann bspw. ein Zellenrad oder ein Zellenrotor sein, wie oben dargestellt - erfolgt. Bei dem Verfahren kann somit vorgesehen sein, dass durch eine Veränderung und/oder einen Austausch des in der Dosier- und/oder Fördereinrichtung rotierenden Dosierorgans (z.B. Zellenrad oder Zellenrotor) die untere Grenzfördermenge und/oder die obere Grenzfördermenge verändert wird/werden.

Je nach verwendetem Förderelement oder Dosierorgan kann das Verfahren weiterhin vorsehen, dass das insbesondere rotierende Dosierorgan mit z.B. mindestens 15 Umdrehungen pro Minute und höchstens 60 Umdrehungen pro Minute, hierbei vorzugsweise mit 40 Umdrehungen pro Minute betrieben wird. Wahlweise kann jedoch auch vorgesehen sein, dass das Dosierorgan mit mindestens 15 Umdrehungen pro Minute und höchstens 100 Umdrehungen pro Minute, vorzugsweise mit 75 Umdrehungen pro Minute betrieben wird. Diese Werte sind jedoch nur beispielhaft zu verstehen und können in der Praxis auch in anderen Größenordnungen liegen. Zudem kann vorgesehen sein, dass das rotierende Dosierorgan elektromotorisch, hydraulisch, pneumatisch oder auf andere Weise angetrieben wird.

Eine weitere sinnvolle Option des erfindungsgemäßen Verfahrens kann vorsehen, dass bei mehreren deaktivierten Reiheneinheiten und vor der Deaktivierung weiterer Reiheneinheiten ein Erreichen oder eine Unterschreitung der unteren Grenzfördermenge detektiert wird, so dass bei einer festgestellten Unterschreitung der unteren Grenzfördermenge alle verbliebenen aktiven Reiheneinheiten gemeinsam deaktiviert werden können. Ebenso ist es denkbar, dass bei allen deaktivierten Reiheneinheiten und vor der Aktivierung einzelner oder mehrerer Reiheneinheiten ein Erreichen oder eine Überschreitung der unteren Grenzfördermenge detektiert wird, so dass gruppenweise eine Mindestanzahl an Reiheneinheiten gemeinsam aktiviert wird, bis die untere Grenzfördermenge überschritten wird. Bei beiden beschriebenen Regel- oder Schaltsituationen kann somit sichergestellt werden, dass die Dosier- und/oder Fördereinheit nicht außerhalb ihrer Betriebsgrenzen betrieben wird, sondern dass zumindest die untere Grenzfördermenge als zusätzliches und/oder überlagertes Regel- oder Schaltkriterium verwendet wird, das zur Abschaltung aller verbleibenden Reiheneinheiten oder zur Zuschaltung von mehr Reiheneinheiten als im Einzelfall gewünscht führen kann.

Außerdem kann das Verfahren vorsehen, dass bei mehreren vorhergehenden Steuerbefehlen zur Aktivierung und/oder Deaktivierung von einzelnen oder mehreren Reiheneinheiten, die aufgrund einer Unterschreitung der unteren Grenzfördermenge mit einem aktuell montierten Dosierorgans abgelehnt und/oder in modifizierter Form ausgeführt wurden, ein optisch und/oder akustisch erkennbarer Hinweis zum Austausch des Dosierorgans ausgegeben wird. Auf diese Weise kann dem Fahrer oder dem Maschinenführer der deutliche Hinweis gegeben werden, dass angesichts des mehrfach gewünschten oder angeforderten Betriebes der landwirtschaftlichen Verteilmaschine außerhalb der Betriebsgrenzen des jeweils eingesetzten Dosierorgans (z.B. gebildet durch einen Zellenrotor) ein Austausch des Dosierorgans gegen ein solches mit anderen Betriebsgrenzen sinnvoll wäre.

Bei einer weiteren Verfahrensvariante kann vorgesehen sein, dass während einer Feldfahrt der landwirtschaftlichen Verteilmaschine Daten mit Ortskoordinaten, insbesondere GPS-Daten berücksichtigt und ausgewertet werden, wobei in Abhängigkeit der verarbeiteten Ortskoordinaten bzw. GPS-Daten und in Abhängigkeit von der jeweiligen Fahrsituation und/oder der jeweiligen Position auf einem zu bearbeitenden Areal einzelne Reiheneinheiten oder Gruppen von Reiheneinheiten aktiviert bzw. deaktiviert werden. Je nach festgestellter Fahrsituation kann bei dem Dosierorgan die Drehzahl verändert werden, wobei eine solche Drehzahlveränderung auch mit einer Variation weiterer Parameter kombiniert werden kann. Je nach erfasster Fahrsituation kann bspw. in einer weiteren Ausführungsform die Anordnung der Reihen auf dem zu bearbeitenden Areal mit beachtet werden. D.h., wird bspw. eine Spitze einer Ackerfläche bearbeitet, können jeweils die in der Mitte der Verteilmaschine angeordneten Reihen eine Gruppe bilden, und es können die außen angeordneten Reihen eine Gruppe bilden. Die Gruppen können jeweils fest zueinander verdrahtet oder verschaltet sein, so dass bspw. jeweils eine Mehrzahl von benachbarten Reihen eine Gruppe bildet. Jedoch kann wahlweise durch das Regelungsprogramm definiert werden, dass auch an verschiedenen Stellen der Verteilmaschine angeordnete Reihen eine Gruppe bilden können, bspw. die jeweils äußersten Reihen der Verteilmaschine.

Wie oben bereits angedeutet, kann das erfindungsgemäße Verfahren in einigen oder allen seinen beschriebenen Ausführungsvarianten insbesondere bei einer landwirtschaftlichen Verteilmaschine sinnvoll zur Anwendung kommen, die mit einer Dosiervorrichtung und einem Hauptverteilerturm oder einer vergleichbaren Verzweigungseinrichtung ausgestattet ist, wobei der Hauptverteilerturm oder die alternativ einsetzbare Verzweigungseinrichtung derart aufgebaut ist, dass jede seiner abzweigenden Reihen separat schaltbar - aktivierbar oder deaktivierbar - ist. Der Verteilerturm kann wahlweise eine Einzelreihenschaltung oder auch eine gruppenweise Schaltung von Abgängen bzw. von Reihen ermöglichen. In Abhängigkeit von der/den jeweils zu- oder abgeschalteten Reihe oder Reihen wird die Drehzahl der Dosiervorrichtung innerhalb definierter bzw. definierbarer Grenzen erhöht oder verringert, wobei dies insbesondere nur innerhalb der minimalen und der maximalen Drehzahlen möglich ist bzw. sein soll. Das bedeutet, wenn nahezu alle Reihen abgeschaltet werden, müsste auch die Drehzahl einen Wert von etwa Null annehmen, was jedoch aufgrund der für das Drehmoment erforderlichen Mindestdrehzahl in aller Regel praktisch nicht sinnvoll umsetzbar ist.

Eine beispielhafte Konfiguration einer entsprechend ausgestatteten und konfigurierbaren landwirtschaftlichen Verteilmaschine mag dies verdeutlichen. So kann bspw. eine Sämaschine mit einer Arbeitsbreite von etwa sechs Metern mit insgesamt vierzig Säscharen bzw. mit vierzig Reihen ausgestattet sein. Der Drehzahlbereich des als Dosierorgans eingesetzten Zellenrotors liegt z.B. zwischen 15 und 60 Umdrehungen pro Minute. Solange alle Säschare mit Saatgut versorgt werden bzw. solange alle Reihen offen sind, beträgt bspw. die optimale Drehzahl, bei einer vorher definierten Ausbringmenge, des Zellenrotors z.B. etwa 40 U/min. Pro abgeschaltener Reihe kann nun bspw. die Drehzahl um etwa 1 U/min verringert werden, bis die konstruktiv bedingte Mindestdrehzahl des Zellenrotors erreicht wird. Ab dieser Drehzahl werden nun nicht mehr einzelne Reihen abgeschaltet, sondern bspw. Gruppen mit mehreren Reihen, um somit wiederum die Drehzahl nicht weiter verringern zu müssen. Im vorliegenden Beispiel würde dies bedeuten, dass bspw. bei nur noch fünfzehn vorhandenen Reihen der gesamte Verteilerturm bzw. die Dosierung mittels des Zellenrotors abgeschaltet wird.

Ebenso wäre es jedoch auch denkbar, einen anderen Zellenrotor zu verwenden, so dass bspw. der Drehzahlbereich zwischen 15 und 100 U/min liegen würde. Sind an der Maschine wiederum vierzig Säschare bzw. Reihen vorhanden, kann der optimale Drehzahlwert bspw. bei 75 U/min liegen. Nun kann vorgesehen sein, dass bspw. bei noch fünfzehn offenen Reihen die Drehzahl bei 30 U/min liegt. Um die durch die Dosiervorrichtung dosierte Menge an Verteilgut konstant zu halten, können nun bspw. nicht mehr einzelne Reihen abgeschaltet werden, sondern bspw. eine Gruppe von Reihen. So kann bspw. vorgesehen sein, dass eine Einzelreihenabschaltung nur bis zu einer Mindestdrehzahl (untere Grenzfördermenge) erfolgt, ab der dann eine Gruppe von Reihen abgeschaltet wird bzw. alle Reihen gruppenweise abgeschaltet werden.

In entsprechender Weise kann beim Einschalten der Reihen vorgegangen werden, so dass bspw. zunächst nur eine Gruppe mit mehreren Reihen eingeschaltet werden kann, bis die Mindestdrehzahl des Zellenrotors erreicht wird. Nach dem Erreichen der Mindestdrehzahl kann dann wiederum jede Reihe einzeln hinzugeschaltet werden.

Mit Hilfe der vorliegenden Erfindung wird somit mittels eines in einer Regeleinrichtung hinterlegten Regelungsprogramm jeweils definiert, ob für einen optimalen Drehzahlbereich des Zellenrotor der Dosiervorrichtung jeweils einzelne Reihen geschaltet werden können oder ob jeweils eine gruppenweise Schaltung der Reihen erfolgen soll. Eine Gruppe von Reihen kann hierbei mindestens zwei Reihen betragen. Typischerweise umfasst eine solche schaltbare Gruppe von Reihen insbesondere fünf Reihen, jeweils in Abhängigkeit der Anzahl an vorhandenen Reihen. Auch können sich die Reihen jeweils auf zwei Verteilertürme aufteilen, wobei eine Gruppe sich auch aus Reihen von zwei Verteilertürmen zusammensetzen kann.

Zudem kann vorgesehen sein, dass im Zusammenhang mit einer variablen Definition der Gruppengröße mittels des Regelungsprogramms Hinweise an eine Bedienperson erfolgen können, dass ggf. ein falscher Zellenrotor verwendet wird. Das bedeutet, wird bspw. nur immer ein oberer oder unterer Drehzahlgrenzwert erreicht, und müssen dadurch jeweils Gruppen geschalten werden, lässt dies darauf schließen, dass ein ungeeigneter Zellenrotor verwendet wird. Durch Verwendung eines anderen Zellenrotors kann dies wieder ausgeglichen werden und somit wieder eine Einzelreihenschaltung ermöglicht werden.

Mittels des Regelungsprogramms kann zudem noch jeweils eine Auswertung der jeweils bearbeiteten Ackerflächen erfolgen. Hierzu können bspw. auch GPS-Daten mit einbezogen werden. Somit kann mittels des Regelungsprogrammes berechnet werden, ob eine Gruppenschaltung oder eine Reihenschaltung in Bezug auf die zu bearbeitende Fläche erfolgen soll. Somit können als Regelungsparameter bspw. der Drehzahlbereich des Zellenrotors, die zu bearbeitende Fläche sowie die Einzelreihen- oder Gruppenschaltung der Reihen dienen.

In einer weiteren Ausführungsform kann zudem die Anordnung der Reihen mit beachtet werden. D.h. wird bspw. eine Spitze einer Ackerfläche bearbeitet, können jeweils die in der Mitte der Verteilmaschine angeordneten Reihen eine Gruppe bilden oder die außen angeordneten Reihen eine Gruppe bilden.

Die Gruppen können wahlweise jeweils fest zueinander verdrahtet oder verschaltet sein, so dass bspw. jeweils eine Mehrzahl von benachbarten Reihen eine Gruppe bildet. Die Gruppen können jedoch auch durch das Regelungsprogramm in variabler Weise definiert werden, so dass auch an verschiedenen Stellen der Verteilmaschine angeordnete Reihen eine Gruppe bilden können, bspw. die jeweils äußersten Reihen der Verteilmaschine.

Wie es die obigen Beschreibungspassagen verdeutlichen, dient die vorliegende Erfindung somit der praxisgerechten Umsetzung eines sog. Section-Control-Systems. Ein in der Praxis bekanntes Problem besteht insbesondere darin, dass bei der Aussaat eines sog. Vorbeets bzw. Vorgewendes der Spuranzeiger nicht verwendet werden kann, zumal an immer mehr Maschinen keine Spuranzeiger mehr angebaut sind. Dadurch wird es am Vorbeet immer schwer, die der ersten Spur folgenden Spuren zu säen. Zudem arbeiten hierbei auch GPS-Systeme nicht immer ausreichend genau. Zur Lösung dieser Problematik könnte nun vorgesehen sein, die Einzelreihen von einer Seite der Maschine her beginnen abzuschalten (beliebig rechts oder links), bspw. für die jeweils die ersten ein bis drei Meter Arbeitsbreite. Für den Rest der Arbeitsbreite wird dann in Sektionen (bspw. in Einheiten von jeweils einem Meter) weiter abgeschaltet.

Wenn nun beim Säen der ersten Umrundungsspur leicht überlappt wird, regelt das GPS-System bzw. das mit dem Regelungsprogramm verbundene GPS-System und das Section-Control System der Maschine die einzelnen am Rand befindlichen Reihen entsprechend weg, wodurch die Überlappungen entsprechend verringert werden können und zudem die durch die Dosiervorrichtung dosierte Menge jeweils durch die Einhaltung der Mindest- und Maximaldrehzahl jeweils eingehalten wird. Durch diese Art der Ansteuerung ist es quasi fast möglich, "kreuz und quer" zu fahren, ohne dass zu große Überlappungsbereich entstehen. Gleichzeitig hat das Verfahren den Vorteil, dass die vorgegebene Menge an Verteilgut für die vorgesehene Gesamtfläche ausreicht.

Zur Erreichung der oben genannten Ziele schlägt die Erfindung neben dem in zahlreichen Ausführungsvarianten beschriebenen Verfahren zur Einzelreihen- und/oder Gruppenschaltung einer landwirtschaftlichen Verteilmaschine auch eine solche landwirtschaftliche Verteilmaschine mit einer Mehrzahl von einzeln und/oder in Gruppen aktivierbaren und/oder deaktivierbaren Reiheneinheiten zur gesteuerten Ausbringung von granulatartigem Verteilgut wie Saatgut oder Dünger vor. Diese Reiheneinheiten der landwirtschaftlichen Verteilmaschine werden jeweils von mindestens einem Vorratsbehälter mit darin befindlichem Verteilgut mittels einer zwischen dem mindestens einen Vorratsbehälter und den Reiheneinheiten angeordneten und hinsichtlich ihrer Fördermenge an Verteilgut je Zeiteinheit steuer- und/oder regelbaren Dosier- und/oder Fördereinrichtung gespeist.

Außerdem ist bei der erfindungsgemäßen landwirtschaftlichen Verteilmaschine vorgesehen, dass die Dosier- und/oder Fördereinrichtung innerhalb eines definierbaren und/oder veränderlichen Betriebsbereiches zwischen einer unteren Grenzfördermenge und einer oberen Grenzfördermenge arbeitet oder betreibbar ist. Eine Gesamtfördermenge der Dosier- und/oder Fördereinrichtung ist bei allen aktivierten Reiheneinheiten kleiner oder in etwa gleich der oberen Grenzfördermenge. Außerdem ist die von der steuer- und/oder regelbaren Dosier- und/oder Fördereinrichtung geförderte Fördermenge an Verteilgut mit der und/oder in Abhängigkeit von der jeweiligen Anzahl an aktivierten oder deaktivierten Reiheneinheiten variabel.

Die erfindungsgemäße landwirtschaftliche Verteilmaschine zeichnet sich dadurch aus, dass eine Mindestanzahl an aktiviert bleibenden Reiheneinheiten auf den Betriebsbereich der Dosier- und/oder Fördereinrichtung und/oder auf die jeweilige untere Grenzfördermenge abgestimmt ist, und dass bei einer Erreichung und/oder Unterschreitung der unteren Grenzfördermenge entweder alle verbleibenden Reiheneinheiten mitsamt der Dosier- und/oder Fördereinrichtung abschaltbar sind oder die für eine Erreichung oder Aufrechterhaltung der unteren Grenzfördermenge erforderliche Mindestzahl an Reiheneinheiten aktiviert bleiben.

Zudem kann vorgesehen sein, dass bei jeder Variation der mittels der steuer- und/oder regelbaren Dosier- und/oder Fördereinrichtung erhöhbaren oder reduzierbaren Fördermenge an Verteilgut im Zusammenhang mit einer Veränderung der jeweiligen Anzahl an aktivierten bzw. deaktivierten Reiheneinheiten die untere Grenzfördermenge einen Mindestwert größer als Null aufweist. Die Variation der mittels der Steuer- und/oder regelbaren Dosier- und/oder Fördereinrichtung erhöhbaren oder reduzierbaren Fördermenge an Verteilgut kann insbesondere im Zusammenhang mit einer Veränderung und/oder einem Austausch eines der Dosier- und/oder Fördereinrichtung zugeordneten rotierenden Dosierorgans - dieses kann bspw. ein rotierendes Zellenrad zum steuerbaren und/oder regelbaren Zudosieren des Verteilgutes in den Förderluftstrom sein - erfolgen. Eine Veränderung und/oder ein Austausch des in der Dosier- und/oder Fördereinrichtung rotierenden Dosierorgans (z.B. Zellenrad) steht/stehen hierbei mit einer Veränderung der unteren Grenzfördermenge und/oder der oberen Grenzfördermenge im Zusammenhang.

Bei der erfindungsgemäßen landwirtschaftlichen Verteilmaschine kann das rotierende Dosierorgan insbesondere einen elektromotorischen, einen hydraulischen, einen pneumatischen oder anderen Antrieb aufweisen.

Während einer Feldfahrt der landwirtschaftlichen Verteilmaschine können in vorteilhafter Weise Daten mit Ortskoordinaten, insbesondere GPS-Daten berücksichtigt und ausgewertet werden, wobei in Abhängigkeit der verarbeiteten Ortskoordinaten bzw. GPS-Daten in Abhängigkeit von der jeweiligen Fahrsituation und/oder der jeweiligen Position auf einem zu bearbeitenden Areal einzelne Reiheneinheiten oder Gruppen von Reiheneinheiten aktiviert bzw. deaktiviert werden.

Die erfindungsgemäße landwirtschaftliche Verteilmaschine kann bspw. einen Verteilturm entsprechend der WO 2017 055 266 A1 oder entsprechend einer anderen geeigneten Bauart aufweisen. Insbesondere sollte es der eingesetzte Verteilerturm oder die eingesetzte Verteil- und/oder Verzweigungseinrichtung ermöglichen, alle verfügbaren Abgänge oder Verzweigungsstellen für den Luftvolumenstrom mitsamt dem darin beförderten Verteilgut schnell und zuverlässig aktivieren und deaktivieren zu können, um die gewünschte Regelbarkeit gemäß der vorliegenden Erfindung in der gewünschten Regelgüte zu erreichen.

Eine derartige landwirtschaftliche Verteilmaschine, wie sie in vorteilhafter Weise im Zusammenhang mit der Erfindung einsetzbar ist, kann bspw. einen trichterförmigen Vorratsbehälter zum Bevorraten und Bereitstellen des auszubringenden Verteilguts aufweisen. An der tiefsten Position des Vorratsbehälters kann diesem trichterförmigen Vorratsbehälter eine Dosiervorrichtung zugeordnet sein. Denkbar sind auch einzelne Behälter mit mehreren Dosiervorrichtungen oder Maschinen mit zwei oder mehr Behältern, denen jeweils mindestens eine Dosiervorrichtung zugeordnet ist, insbesondere jeweils an der tiefsten Stelle des Vorratsbehälters. Mittels dieser Dosiervorrichtung wird das jeweils auszubringende Verteilgut in einer gewünschten Menge in ein mit einem Luftvolumenstrom beaufschlagtes Leitungssystem zudosiert bzw. beigemischt. Der Luftvolumenstrom wird meist mittels Gebläses, z.B. mittels Radial- oder Zentrifugalgebläses oder dergl. erzeugt. Durch das Beimengen von Verteilgut in den Luftvolumenstrom entsteht somit im Leitungssystem ein Verteilgut-Luftvolumenstrom. Mit Hilfe dieses Förderstroms, bei dem das Verteilgut in der als Trägermedium fungierenden Luftströmung getragen wird, wird das Verteilgut mit einer Strömungsgeschwindigkeit in Richtung des Verteilerturms befördert. Der Verteilerturm weist hierbei zunächst bspw. ein weitgehend senkrecht verlaufendes Steigrohr auf, an dessen oberen Ende ein Verteilerkopf mit einer Mehrzahl von an dessen Umfang gleichmäßig angebrachten Abgängen bzw. Reihen anschließt. Im Verteilerkopf erfährt der Verteilgut-Luftvolumenstrom eine Richtungsumkehr aus einer bspw. senkrechten Bewegung entlang des Steigrohrs in eine waagerechte Bewegung in Richtung der Abgänge, wodurch der eine Verteilgut-Luftvolumenstrom in eine Mehrzahl von Verteilgut-Luftvolumenströmen, entsprechend der Anzahl an Abgängen, aufgeteilt wird.

Wenigstens einem der Abgänge kann eine Absperrvorrichtung zu- bzw. nachgeordnet sein. Diese kann in einer bevorzugten Ausführungsvariante bspw. durch einen Saatleitungsanschluss gebildet sein, an welchem eine Saatleitung angebracht werden kann, mittels derer das Verteilgut in Richtung von Bodennah oder im Boden geführten Ausbringeinrichtungen wie Scheibenschare oder Zinkenschare oder dergl. transportiert werden kann. Weiter kann die Absperrvorrichtung in einer derartigen Ausführungsvariante einen Rückführbereich in Form eines Rückführanschlusses bzw. einer Rückführöffnung aufweisen, welcher wiederum mit einer Rückführeinrichtung verbunden ist, mittels welcher Rückführeinrichtung das Verteilgut in das Steigrohr zurück befördert bzw. geleitet wird. Ob das Verteilgut in Richtung der Saatleitung oder in Richtung des Rückführbereiches geleitet wird kann mit einer Weiche gesteuert werden, die bspw. durch ein Kugelventil, ein Kegelventil oder eine vergleichbare Absperrvorrichtung gebildet sein kann.

Die Absperrvorrichtung kann als separates Teil, welches an die Abgänge des Verteilerkopfs angebracht wird, ausgeführt sein. Ebenso könnte die Absperrvorrichtung bzw. insbesondere die Weiche in den Verteilerkopf integriert sein. Bei einer derartigen Ausführung könnte bspw. die Bodenfläche des Verteilerkopfs entsprechend der Anzahl an Abgängen bzw. Weichen Rückführöffnungen aufweisen, welche Rückführöffnungen als Rückführbereiche dienen. An die Rückführöffnung könnte bspw. eine Rückführeinrichtung in Form eines Trichters anschließen.

Hinsichtlich aller oben erwähnten Aspekte und Ausführungsvarianten des erfindungsgemäßen Verfahrens zur Einzelreihen- und/oder Gruppenschaltung einer landwirtschaftlichen Verteilmaschine, die eine Mehrzahl von einzeln und/oder in Gruppen aktivierbaren und/oder deaktivierbaren Reiheneinheiten zur gesteuerten Ausbringung von granulatartigem Verteilgut wie Saatgut oder Dünger aufweist, sei an dieser Stelle darauf hingewiesen, dass diese Aspekte und Charakteristika gleichermaßen Teil der erfindungsgemäßen landwirtschaftlichen Verteilmaschine sein oder Anwendung auf diese finden können. Wenn daher an irgend einer Stelle der obigen Beschreibung von bestimmten Aspekten und Varianten des Verfahrens und/oder der Maschine die Rede ist, so sind diese Aspekte und Ausführungsvarianten gleichermaßen auf die Maschine sowie auf das Verfahren zu lesen und sollen auch in dieser Weise verstanden werden.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Ansicht einer Ausführungsvariante einer landwirtschaftlichen Verteilmaschine am Beispiel einer pneumatisch arbeitenden Sämaschine mit volumendosiertem Saatgut, das über einen Zentralverteiler zu einzelnen Saatleitungen mit mündungsseitig daran angeordneten Säscharen geführt wird.
Fig. 2 zeigt in insgesamt vier schematischen Ablaufdiagrammen (Fig. 2A, Fig. 2B, Fig. 2C und Fig. 2D) verschiedene Programmvarianten zur Steuerung der landwirtschaftlichen Verteilmaschine.

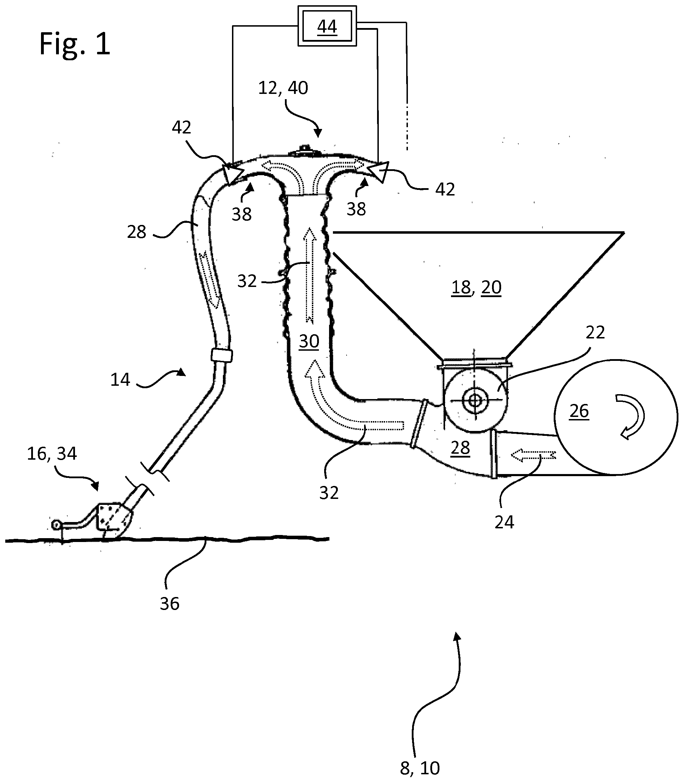

Für gleiche oder gleich wirkende Elemente der Erfindung werden in den Figuren 1 bis 2D jeweils gleiche Bezugsziffern verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße landwirtschaftliche Verteilmaschine und/oder das erfindungsgemäße Verfahren zur Einzelreihen- und/oder Gruppenschaltung einer solchen landwirtschaftlichen Verteilmaschine ausgestaltet sein können und stellen keine abschließende Begrenzung dar.

Die schematische Darstellung der Fig. 1 zeigt eine Ausführungsvariante einer landwirtschaftlichen Verteilmaschine 8 am Beispiel einer pneumatisch arbeitende Sämaschine 10 mit volumendosiertem Saatgut, das über einen Zentralverteiler 12 zu einzelnen Saatleitungen 14 mit mündungsseitig daran angeordneten Säscharen 16 geführt wird. Die in ihrem grundlegenden Aufbau aus dem Stand der Technik bekannte Sämaschine 10 weist typischerweise einen trichterförmigen Vorratsbehälter 18 mit körnigem Gut, insbesondere mit Saatgut 20 auf, an dessen Unterseite sich eine Dosiereinrichtung 22 befindet, die das körnige Gut bzw. das Saatgut 20 in einen Luftstrom 24 dosiert, der von einem Gebläse 26 erzeugt und in eine Luftleitung 28 befördert wird, die zu einem senkrecht angeordneten Steigrohr 30 führt. An einer Oberseite des Steigrohrs 30 - dies kann bspw. ein sog. Wellrohr o. dgl. sein - befindet sich der oben erwähnte Zentralverteiler 12, der den körnertragenden Luftstrom 32 möglichst gleichmäßig zu einer Vielzahl von Saatleitungen 14 verteilt. Die einzelnen Saatleitungen 14, von denen der besseren Übersichtlichkeit halber nur eine dargestellt ist, münden schließlich jeweils an den jeweiligen Säscharen 16 der Reiheneinheiten 34 der landwirtschaftlichen Verteilmaschine 8 oder Sämaschine 10, mit denen das Saatgut 20 in den Ackerboden 36 eingebracht wird. Die Zudosierung des vom Vorratsbehälter 18 in den Luftstrom 24 abgegebenen Saatguts 20 oder körnigen Gutes kann wahlweise nach dem Venturi-Prinzip oder auch durch Unterstützung des unter Druck stehenden, im geschlossenen Drucktank 18 befindlichen Saatgutes 20 erfolgen.

Wie es die Fig. 1 schematisch andeutet, ist jedem der zu jeweils einer Luftleitung 28 führenden Ausgänge 38 des Verteilerkopfes 40 des Zentralverteilers 12 eine separat schaltbare Absperreinrichtung 42 zugeordnet, so dass bei insgesamt vierzig vorhandenen Reiheneinheiten 34 einer beispielhaften landwirtschaftlichen Verteilmaschine 8 oder Sämaschine 10 und damit auch vierzig Ausgängen 38 am Verteilerkopf 40 eine entsprechende Anzahl von schaltbaren Absperreinrichtungen 42 vorhanden sind, die allesamt von einer zentralen Steuer- und/oder Regeleinheit 44 gesteuert und damit geöffnet oder geschlossen werden. Diese zentrale Steuer- und/oder Regeleinheit 44 steuert die Absperreinrichtungen 42 entsprechend der nachfolgend näher erläuterten Vorgaben und Programme, die einen wichtigen Teil der vorliegenden Erfindung bilden.

Der Aufbau und die Konfiguration der separat steuerbaren bzw. schaltbaren Absperreinrichtungen 42 sollen hier nicht im Detail interessieren; der Verteilerkopf 40 sowie die darin angeordneten Absperreinrichtungen 42 können bspw. einen Aufbau und/oder eine Konfiguration aufweisen, wie sie in der WO 2017 055 266 A1 im Detail beschrieben sind.

Darüber hinaus können sich wahlweise innerhalb der Saatleitungen zusätzliche Dosiervorrichtungen befinden, die jeweils den Reiheneinheiten 34 zugeordnet sein können und sich hierbei typischerweise in unmittelbarer Nähe der jeweiligen Säschar 16 der entsprechenden Reiheneinheit 34 befinden können. Diese hier nicht näher gezeigten, optional zu verstehenden Dosiervorrichtungen können je nach Konfiguration der landwirtschaftlichen Verteilmaschine 8 bzw. der Sämaschine 10 dafür sorgen, dass die jeweiligen Säscharen mit körnigem Gut bzw. mit Saatgut 20 beaufschlagt werden, das innerhalb jeder Reiheneinheit 34 mit annähernd gleichen Kornabständen und mit weitgehend jeweils gleichen Fördergeschwindigkeiten in den Ackerboden abgegeben wird. Da bei einer realen Sämaschine 10 eine Vielzahl solcher paralleler Säscharen 34 vorgesehen sind (z.B. vierundzwanzig, zweiunddreißig, vierzig), die jeweils mit separaten Saatleitungen 14 verbunden und von diesen versorgt sind, kann auch eine entsprechende Anzahl solcher jeweils gleichartig aufgebauter Dosiervorrichtungen vorgesehen sein, da in diesem Fall jede einzelne Saatleitung 14 eine solche Dosiervorrichtung aufweisen kann. Mit diesen optionalen Dosiervorrichtungen, die bspw. einen Aufbau entsprechend der EP 2 858 473 B1 sowie eine Ansteuerung entsprechend der EP 2 988 586 B1 aufweisen können, ist es möglich, Sämaschinen 10, die normalerweise nur für eine Drillsaat geeignet sind, als Einzelkornsämaschinen einzusetzen.

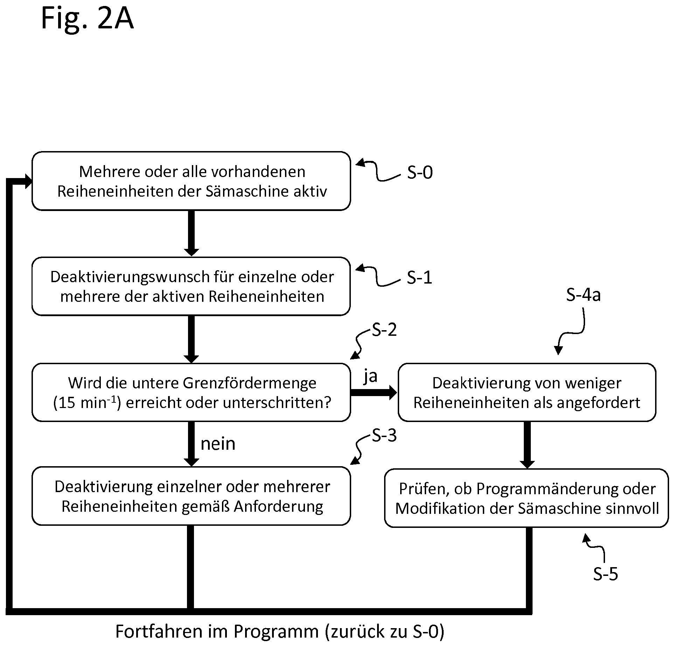

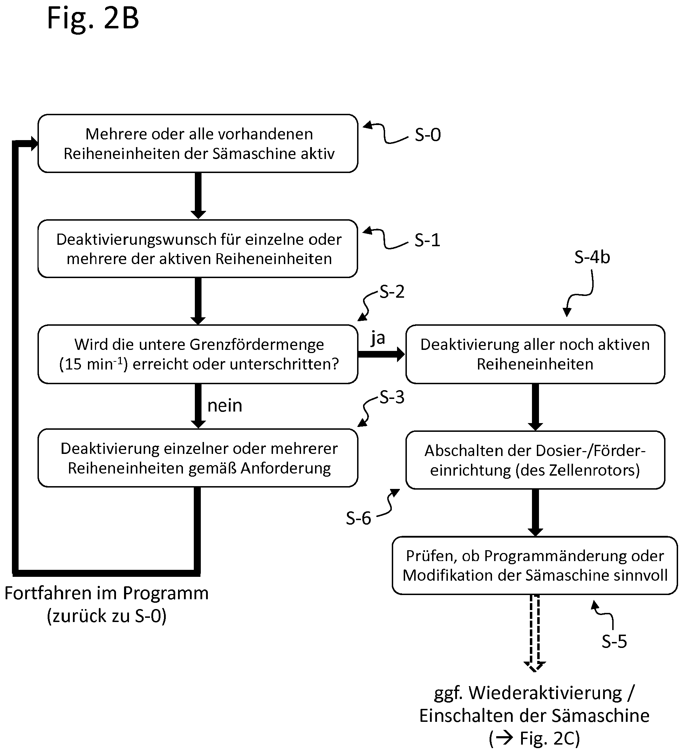

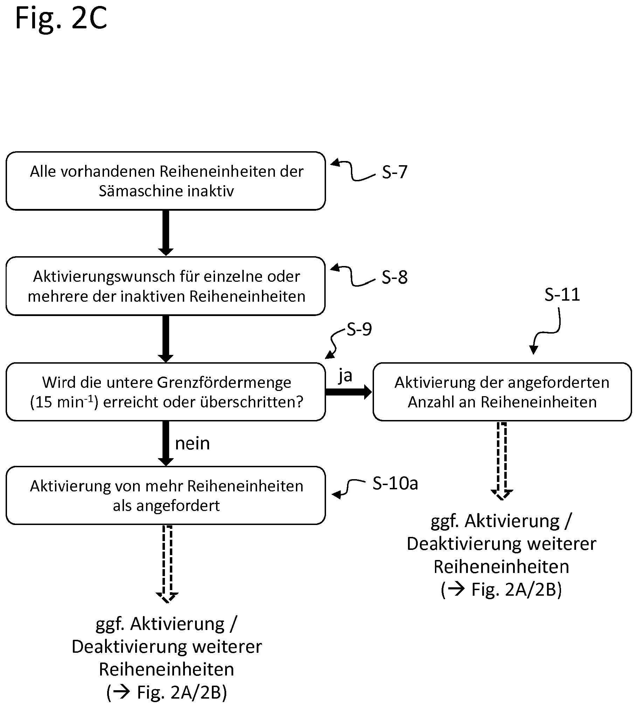

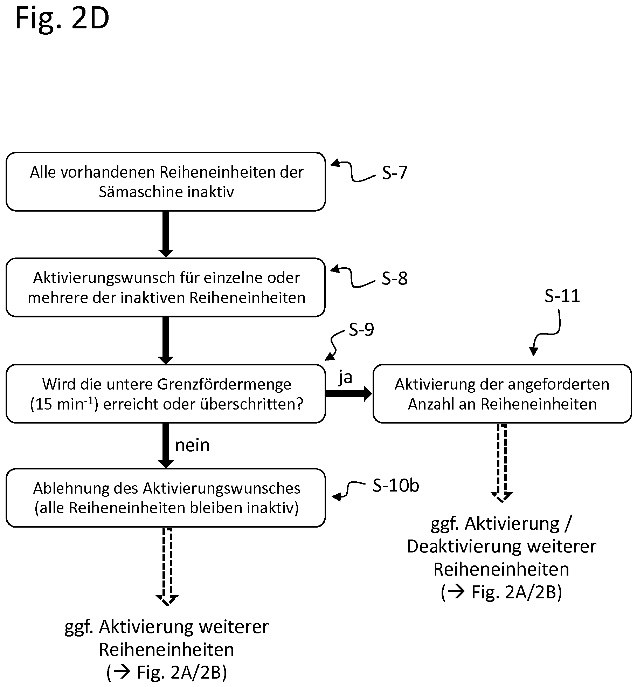

Die schematischen Ansichten der Figuren 2A, 2B, 2C und 2D verdeutlichen unterschiedliche Abläufe bei sinnvollen Ausführungsvarianten des erfindungsgemäßen Verfahrens zur Einzelreihen- und/oder Gruppenschaltung einer landwirtschaftlichen Verteilmaschine 8, wie sie beispielhaft und in schematischer Weise in Fig. 1 gezeigt ist. Da die dort gezeigte landwirtschaftliche Verteilmaschine 8 oder Sämaschine 10 eine Mehrzahl - z.B. zweiunddreißig oder vierzig - von mittels der Steuer- und/oder Regeleinheit 44 einzeln und/oder in Gruppen aktivierbaren und/oder deaktivierbaren Reiheneinheiten 34 zur gesteuerten Ausbringung von granulatartigem Verteilgut wie Saatgut 20 oder Dünger aufweist, und da zudem erfindungsgemäß vorgesehen ist, dass die dort für die Zudosierung des aus dem Vorratsbehälter 18 entnommenen Saatgutes 20 in den Luftstrom 24 eingesetzte Dosier- und/oder Fördereinrichtung 22 innerhalb eines definierbaren und/oder veränderlichen Betriebsbereiches zwischen einer unteren Grenzfördermenge mit einer Umdrehungsgeschwindigkeit eines als Dosierelements eingesetzten Zellenrotors von bspw. 15 min⁻¹ (Umdrehungen pro Minute) und einer oberen Grenzfördermenge mit einer Umdrehungsgeschwindigkeit von bspw. 60 min⁻¹ arbeitet, ist bei vielen Regel- bzw. Schaltvorgängen die Berücksichtigung weiterer Kriterien notwendig.

Zwar sieht die sinnvolle Gesamtauslegung der landwirtschaftlichen Verteilmaschine 8 bzw. Sämaschine 10 unter Berücksichtigung der maximal eingesetzten Anzahl an zu versorgenden Reiheneinheiten 34 vor, dass eine Gesamtfördermenge der Dosier- und/oder Fördereinrichtung 22 bei allen aktivierten Reiheneinheiten 34 nicht die obere Grenzfördermenge überschreitet. Darüber hinaus ermöglicht es die Bandbreite der Umdrehungsgeschwindigkeit des rotierenden Dosierelements zwischen den oben als beispielhafte Werte angegebenen 15 min⁻¹ und 60 min⁻¹, die von der steuer- und/oder regelbaren Dosier- und/oder Fördereinrichtung 22 geförderte Fördermenge an Verteilgut oder Saatgut 20 in Abhängigkeit von der jeweiligen Anzahl an aktivierten oder deaktivierten Reiheneinheiten 34 bedarfsweise zu erhöhen oder zu reduzieren. Dennoch kann die Situation entstehen, dass bei nur noch sehr wenigen aktivierten Reiheneinheiten 34 und bei bereits sehr geringer Umdrehungsgeschwindigkeit des als Dosier- und/oder Fördereinrichtung 22 eingesetzten Zellenrotors von kaum mehr als 15 min⁻¹ und weiteren Deaktivierungswünschen die untere Grenzfördermenge unterschritten würde. Insbesondere bei einem elektromotorischen Antrieb des Zellenrotors der Dosier- und/oder Fördereinrichtung 22 darf allerdings die Drehzahl nicht den konstruktiv vorgegebenen Mindestwert (hier im Beispiel: 15 min⁻¹) unterschreiten, da ansonsten ein erforderliches Mindestdrehmoment zum Antrieb des Zellenrotors nicht mehr erreicht wird. Zudem kann sowohl bei einer zu großen als auch bei einer zu kleinen Drehzahl nicht mehr die korrekte und gleichmäßige Füllung aller Öffnungen bzw. Zellen des Zellenrotors mit Saatgut gewährleistet werden, was wiederum negative Auswirkungen auf die Gleichmäßigkeit der Verteilung des Saatguts 20 auf dem Ackerboden 36 nach sich ziehen kann.

Wie es das schematische Blockschaltbild der Fig. 2A zeigt, wird als Ausgangssituation (S-0) bei einer Fahrsituation, bei der mehrere oder alle Reiheneinheiten 34 der Sämaschine 10 aktiviert sind, in einem ersten Schritt S-1 bei jedem durch eine entsprechende Fahrsituation vorgegebenen und durch die Steuer- und/oder Regeleinheit 44 (vgl. Fig. 1) gesteuerten Deaktivierungswunsch einzelner Reiheneinheiten 34 oder mehrerer Reiheneinheiten 34 abgefragt, ob insbesondere die untere Grenzfördermenge (hier: 15 min⁻¹) tangiert oder unterschritten oder überschritten wird (zweiter Schritt S-2). So wird bei der Verarbeitung eines Deaktivierungswunsches zur Abschaltung zuvor im Betrieb befindlicher Reiheneinheiten 34 zunächst überprüft, ob hierdurch die jeweils eingestellte oder konstruktiv vorgegebene untere Grenzfördermenge erreicht oder unterschritten wird. Nur wenn dies nicht der Fall ist (Antwort "nein" in der Abfrage im Schritt S-2), wird der jeweilige Deaktivierungswunsch tatsächlich ausgeführt, was durch den Schritt S-3 gekennzeichnet ist.

Führt dagegen der Deaktivierungswunsch für einzelne Reiheneinheiten 34 oder mehrere Reiheneinheiten 34 zu einer Unterschreitung der unteren Grenzfördermenge (Antwort "ja" in der Abfrage im Schritt S-2), so wird im Programmschritt S-4a dieser Deaktivierungswunsch bei der Verfahrensvariante gemäß Fig. 2A dahingehend modifiziert, dass weniger Reiheneinheiten 34 deaktiviert werden als zunächst angefordert. Dies kann unter Umständen sogar dazu führen, dass keine einzige weitere Reiheneinheit 34 deaktiviert wird, sondern dass die Sämaschine 10 in der bisherigen Konfiguration (vgl. Schritt S-0) weiterbetrieben wird. Sofern der Deaktivierungswunsch im Schritt S-4a abgelehnt oder modifiziert wurde, kann in einem nachfolgenden Schritt S-5 geprüft werden, ob eine Programmänderung und/oder eine Modifikation der Sämaschine 10 bzw. der Dosier- und/oder Fördereinrichtung 22 sinnvoll ist, bspw. durch Austausch des dort rotierenden Zellenrotors gegen einen anderen Zellenrotor, der mit anderen unteren und/oder oberen Grenzfördermengen arbeitet. Nach Durchlaufen der Programmschritte S-3 oder S-5 kann das Programm beliebig oft erneut durchlaufen werden, was durch den Pfeil zurück zum Schritt S-0 veranschaulicht ist.

Das schematische Blockschaltbild der Fig. 2B zeigt eine leicht abweichende Programm- bzw. Verfahrensvariante, bei der wiederum als Ausgangssituation (S-0) auf eine Fahrsituation abgestellt wird, bei der mehrere oder alle Reiheneinheiten 34 der Sämaschine 10 aktiviert sind. Auch hier wird in einem ersten Programmschritt S-1 bei jedem durch eine entsprechende Fahrsituation vorgegebenen und durch die Steuer- und/oder Regeleinheit 44 (vgl. Fig. 1) gesteuerten Deaktivierungswunsch einzelner Reiheneinheiten 34 oder mehrerer Reiheneinheiten 34 abgefragt, ob insbesondere die untere Grenzfördermenge (hier: 15 min⁻¹) tangiert oder unterschritten oder überschritten wird (zweiter Schritt S-2). Bei der Verarbeitung des Deaktivierungswunsches zur Abschaltung zuvor im Betrieb befindlicher Reiheneinheiten 34 wird überprüft, ob hierdurch die jeweils eingestellte oder konstruktiv vorgegebene untere Grenzfördermenge erreicht oder unterschritten wird. Nur wenn dies nicht der Fall ist (Antwort "nein" in der Abfrage im Schritt S-2), wird der jeweilige Deaktivierungswunsch tatsächlich ausgeführt, was durch den Schritt S-3 gekennzeichnet ist. Nach Durchlaufen des Programmschrittes S-3 kann das Programm beliebig oft erneut durchlaufen werden, was durch den Pfeil zurück zum Schritt S-0 veranschaulicht ist.

Führt dagegen der Deaktivierungswunsch für einzelne Reiheneinheiten 34 oder mehrere Reiheneinheiten 34 zu einer Unterschreitung der unteren Grenzfördermenge (Antwort "ja" in der Abfrage im Schritt S-2), so wird im Programmschritt S-4b dieser Deaktivierungswunsch bei der Verfahrensvariante gemäß Fig. 2B dahingehend modifiziert, dass alle noch verbleibenden aktiven Reiheneinheiten 34 deaktiviert werden, und dass im nachfolgenden Programmschritt S-6 auch die Dosier- und/oder Fördereinrichtung 22 abgeschaltet wird, bspw. durch Abschalten der Stromversorgung für den elektromotorischen Antrieb des rotierenden Zellenrotors. Sofern die verbleibenden Reiheneinheiten 34 deaktiviert wurden und die Dosier- und/oder Fördereinrichtung 22 abgeschaltet wurde, kann wiederum im nachfolgenden Schritt S-5 geprüft werden, ob eine Programmänderung und/oder eine Modifikation der Sämaschine 10 bzw. der Dosier- und/oder Fördereinrichtung 22 sinnvoll ist, bspw. durch Austausch des dort rotierenden Zellenrotors gegen einen anderen Zellenrotor, der mit anderen unteren und/oder oberen Grenzfördermengen arbeitet. Nach Durchlaufen des Programmschrittes S-5 kann die Sämaschine 10 mitsamt ihren Reiheneinheiten 34 ggf. durch einen entsprechenden Steuerbefehl wieder aktiviert bzw. wieder eingeschaltet werden, was anhand der nachfolgenden Figuren 2C und 2D erläutert wird.

Wie es das schematische Blockschaltbild der Fig. 2C zeigt, wird als Ausgangssituation (S-7) bei einer Fahrsituation, bei der alle vorhandenen Reiheneinheiten 34 der Sämaschine 10 inaktiv sind, in einem ersten Schritt S-8 bei jedem durch eine entsprechende Fahrsituation vorgegebenen und durch die Steuer- und/oder Regeleinheit 44 (vgl. Fig. 1) gesteuerten Aktivierungswunsch einzelner Reiheneinheiten 34 oder mehrerer Reiheneinheiten 34 abgefragt, ob insbesondere die untere Grenzfördermenge (hier: 15 min⁻¹) erreicht oder überschritten wird (nachfolgender Schritt S-9). So wird bei der Verarbeitung eines Aktivierungswunsches zum Einschalten zuvor inaktiver Reiheneinheiten 34 zunächst überprüft, ob hierdurch die jeweils eingestellte oder konstruktiv vorgegebene untere Grenzfördermenge erreicht oder überschritten wird. Nur wenn dies der Fall ist (Antwort "ja" in der Abfrage im Schritt S-9), wird der jeweilige Aktivierungswunsch tatsächlich ausgeführt, was durch den Schritt S-11 gekennzeichnet ist.

Führt dagegen der Aktivierungswunsch für einzelne Reiheneinheiten 34 oder mehrere Reiheneinheiten 34 nicht zur Erreichung der unteren Grenzfördermenge (Antwort "nein" in der Abfrage im Schritt S-9), so wird im Programmschritt S-10a dieser Aktivierungswunsch bei der Verfahrensvariante gemäß Fig. 2C dahingehend modifiziert, dass mehr Reiheneinheiten 34 aktiviert werden als zunächst angefordert.

Auch hierbei kann ggf. wieder geprüft werden, ob eine Programmänderung und/oder eine Modifikation der Sämaschine 10 bzw. der Dosier- und/oder Fördereinrichtung 22 sinnvoll ist, bspw. durch Austausch des dort rotierenden Zellenrotors gegen einen anderen Zellenrotor, der mit anderen unteren und/oder oberen Grenzfördermengen arbeitet (nicht dargestellt). Nach Durchlaufen der Programmschritte S-7 bis S 10a oder S-11 kann das Programm erneut durchlaufen werden oder in einen Deaktivierungsmodus wechseln (vgl. Figuren 2A und/oder 2B).

Wie es das schematische Blockschaltbild der Fig. 2D zeigt, wird wie bei der Variante gemäß Fig. 2C als Ausgangssituation (S-7) bei einer Fahrsituation, bei der alle vorhandenen Reiheneinheiten 34 der Sämaschine 10 inaktiv sind, in einem ersten Schritt S-8 bei jedem durch eine entsprechende Fahrsituation vorgegebenen und durch die Steuer- und/oder Regeleinheit 44 (vgl. Fig. 1) gesteuerten Aktivierungswunsch einzelner Reiheneinheiten 34 oder mehrerer Reiheneinheiten 34 abgefragt, ob insbesondere die untere Grenzfördermenge (hier: 15 min⁻¹) erreicht oder überschritten wird (nachfolgender Schritt S-9). So wird bei der Verarbeitung eines Aktivierungswunsches zum Einschalten zuvor inaktiver Reiheneinheiten 34 zunächst überprüft, ob hierdurch die jeweils eingestellte oder konstruktiv vorgegebene untere Grenzfördermenge erreicht oder überschritten wird. Nur wenn dies der Fall ist (Antwort "ja" in der Abfrage im Schritt S-9), wird der jeweilige Aktivierungswunsch tatsächlich ausgeführt, was durch den Schritt S-11 gekennzeichnet ist.

Führt dagegen der Aktivierungswunsch für einzelne Reiheneinheiten 34 oder mehrere Reiheneinheiten 34 nicht zur Erreichung der unteren Grenzfördermenge (Antwort "nein" in der Abfrage im Schritt S-9), so wird im Programmschritt S-10b dieser Aktivierungswunsch bei der Verfahrensvariante gemäß Fig. 2C dahingehend modifiziert, dass keine einzige Reiheneinheit 34 aktiviert wird, sondern dass die Reiheneinheiten inaktiv bleiben, bis ein weiterer Steuerbefehl erfolgt. Das Programm kann hierbei zum Schritt S-7 zurückgehen (nicht gezeigt). Auch bei dieser Verfahrensvariante kann ggf. wieder geprüft werden, ob eine Programmänderung und/oder eine Modifikation der Sämaschine 10 bzw. der Dosier- und/oder Fördereinrichtung 22 sinnvoll ist, bspw. durch Austausch des dort rotierenden Zellenrotors gegen einen anderen Zellenrotor, der mit anderen unteren und/oder oberen Grenzfördermengen arbeitet (nicht dargestellt). Nach Durchlaufen der Programmschritte S-7 bis S 10b oder S-11 kann das Programm erneut durchlaufen werden oder in einen Deaktivierungsmodus wechseln (vgl. Figuren 2A und/oder 2B).

Bei den beispielhaft zu verstehenden Verfahrensvarianten gemäß Figuren 2A bis 2D wird durch das Programm vorgegeben, dass eine Mindestanzahl an aktiviert bleibenden oder zu aktivierenden Reiheneinheiten 34 auf den Betriebsbereich der Dosier- und/oder Fördereinrichtung 22 und/oder auf die jeweilige untere Grenzfördermenge abgestimmt wird. Außerdem wird durch das Programm vorgegeben, dass bei einer Erreichung und/oder Unterschreitung der unteren Grenzfördermenge entweder alle verbleibenden Reiheneinheiten 34 mitsamt der Dosier- und/oder Fördereinrichtung 22 abgeschaltet werden oder die für eine Erreichung oder Aufrechterhaltung der unteren Grenzfördermenge erforderliche Mindestzahl an Reiheneinheiten 34 aktiviert bleiben.

Die Erfindung wurde unter Bezugnahme auf eine bevorzugte Ausführungsform beschrieben. Es ist jedoch für den Fachmann vorstellbar, dass Abwandlungen oder Änderungen der Erfindung gemacht werden können, ohne dabei den Schutzbereich der nachstehenden Ansprüche zu verlassen.

### Bezuaszeichenliste

- 8: landwirtschaftliche Maschine, landwirtschaftliche Verteilmaschine
- 10: Sämaschine
- 12: Zentralverteiler
- 14: Saatleitung
- 16: Säschar
- 18: Vorratsbehälter
- 20: Saatgut
- 22: Dosiereinrichtung, Fördereinrichtung
- 24: Luftstrom
- 26: Gebläse
- 28: Luftleitung
- 30: Steigrohr
- 32: Luftstrom, körnertragender Luftstrom
- 34: Reiheneinheit
- 36: Boden, Ackerboden
- 38: Ausgang (Verteilerkopf)
- 40: Verteilerkopf
- 42: Absperreinrichtung, schaltbare Absperreinrichtung
- 44: Steuer- und/oder Regeleinheit

## Patentansprüche

1. Verfahren zur Einzelreihen- und/oder Gruppenschaltung einer landwirtschaftlichen Verteilmaschine (8), die eine Mehrzahl von einzeln und/oder in Gruppen aktivierbaren und/oder deaktivierbaren Reiheneinheiten (34) zur gesteuerten Ausbringung von granulatartigem Verteilgut wie Saatgut (20) oder Dünger aufweist, welche Reiheneinheiten (34) zur Ausbringung des granulatartigen Verteilguts jeweils von mindestens einem Vorratsbehälter (18) mit darin befindlichem Verteilgut mittels einer zwischen dem mindestens einen Vorratsbehälter (18) und den Reiheneinheiten (34) angeordneten und hinsichtlich ihrer Fördermenge an Verteilgut je Zeiteinheit steuer- und/oder regelbaren Dosier- und/oder Fördereinrichtung (22) gespeist werden,
- wobei die Dosier- und/oder Fördereinrichtung (22) innerhalb eines definierbaren und/oder veränderlichen Betriebsbereiches zwischen einer unteren Grenzfördermenge und einer oberen Grenzfördermenge arbeitet,
- wobei eine Gesamtfördermenge der Dosier- und/oder Fördereinrichtung (22) bei allen aktivierten Reiheneinheiten (34) kleiner oder in etwa gleich der oberen Grenzfördermenge ist,
- und wobei die von der steuer- und/oder regelbaren Dosier- und/oder Fördereinrichtung (22) geförderte Fördermenge an Verteilgut in Abhängigkeit von der jeweiligen Anzahl an aktivierten oder deaktivierten Reiheneinheiten (34) erhöht oder reduziert wird oder werden kann,
wobei eine Mindestanzahl an zu aktivierenden und/oder aktiviert bleibenden Reiheneinheiten (34) auf den Betriebsbereich der Dosier- und/oder Fördereinrichtung (22) und/oder auf die jeweilige untere Grenzfördermenge abgestimmt wird, und bei einer Erreichung und/oder Unterschreitung der unteren Grenzfördermenge entweder alle verbleibenden Reiheneinheiten (34) mitsamt der Dosier- und/oder Fördereinrichtung (22) abgeschaltet werden oder die für eine Erreichung oder Aufrechterhaltung der unteren Grenzfördermenge erforderliche Mindestzahl an Reiheneinheiten (34) aktiviert bleiben, und wobei mittels eines in einer Regeleinrichtung hinterlegten Regelungsprogramms jeweils definiert wird, ob für einen optimalen Drehzahlbereich eines Zellenrotors der Dosier- und/oder Fördereinrichtung (22) jeweils einzelne Reiheneinheiten (34) geschaltet werden können oder ob jeweils eine gruppenweise Schaltung der Reiheneinheiten (34) erfolgen soll.

2. Verfahren nach Anspruch 1, bei dem bei jeder Variation der mittels der steuer- und/oder regelbaren Dosier- und/oder Fördereinrichtung (22) erhöhbaren oder reduzierbaren Fördermenge an Verteilgut im Zusammenhang mit einer Veränderung der jeweiligen Anzahl an aktivierten bzw. deaktivierten Reiheneinheiten (34) die untere Grenzfördermenge einen Mindestwert größer als Null annimmt.

3. Verfahren nach Anspruch 1 oder 2, bei dem die Variation der mittels der steuer- und/oder regelbaren Dosier- und/oder Fördereinrichtung (22) erhöhbaren oder reduzierbaren Fördermenge an Verteilgut im Zusammenhang mit einer Veränderung und/oder einem Austausch eines der Dosier- und/oder Fördereinrichtung (22) zugeordneten rotierenden Dosierorgans erfolgt.

4. Verfahren nach Anspruch 3, bei dem durch eine Veränderung und/oder einen Austausch des in der Dosier- und/oder Fördereinrichtung (22) rotierenden Dosierorgans die untere Grenzfördermenge und/oder die obere Grenzfördermenge verändert wird/werden.

5. Verfahren nach einem der Ansprüche 1 bis 4, bei dem bei mehreren deaktivierten Reiheneinheiten (34) und vor der Deaktivierung weiterer Reiheneinheiten (34) ein Erreichen oder eine Unterschreitung der unteren Grenzfördermenge detektiert wird, und bei dem bei Unterschreitung der unteren Grenzfördermenge alle verbliebenen aktiven Reiheneinheiten (34) gemeinsam deaktiviert werden.

6. Verfahren nach einem der Ansprüche 1 bis 5, bei dem bei allen deaktivierten Reiheneinheiten (34) und vor der Aktivierung einzelner oder mehrerer Reiheneinheiten (34) ein Erreichen oder eine Überschreitung der unteren Grenzfördermenge detektiert wird, und bei dem gruppenweise eine Mindestanzahl an Reiheneinheiten (34) gemeinsam aktiviert wird, so dass die untere Grenzfördermenge überschritten wird.

7. Verfahren nach einem der vorhergehenden Ansprüche, bei dem bei mehreren vorhergehenden Steuerbefehlen zur Aktivierung und/oder Deaktivierung von einzelnen oder mehreren Reiheneinheiten (34), die aufgrund einer Unterschreitung der unteren Grenzfördermenge mit einem aktuell montierten Dosierorgans abgelehnt und/oder in modifizierter Form ausgeführt wurden, ein optisch und/oder akustisch erkennbarer Hinweis zum Austausch des Dosierorgans ausgegeben wird.

8. Verfahren nach einem der voranstehenden Ansprüche, bei dem während einer Feldfahrt der landwirtschaftlichen Verteilmaschine (8) Daten mit Ortskoordinaten, insbesondere GPS-Daten berücksichtigt und ausgewertet werden, wobei in Abhängigkeit der verarbeiteten Ortskoordinaten bzw. GPS-Daten in Abhängigkeit von der jeweiligen Fahrsituation und/oder der jeweiligen Position auf einem zu bearbeitenden Areal einzelne Reiheneinheiten (34) oder Gruppen von Reiheneinheiten (34) aktiviert bzw. deaktiviert werden.

9. Landwirtschaftliche Verteilmaschine (8) mit einer Mehrzahl von einzeln und/oder in Gruppen aktivierbaren und/oder deaktivierbaren Reiheneinheiten (34) zur gesteuerten Ausbringung von granulatartigem Verteilgut wie Saatgut (20) oder Dünger, welche Reiheneinheiten (34) zur Ausbringung des granulatartigen Verteilguts jeweils von mindestens einem Vorratsbehälter (18) mit darin befindlichem Verteilgut mittels einer zwischen dem mindestens einen Vorratsbehälter (18) und den Reiheneinheiten (34) angeordneten und hinsichtlich ihrer Fördermenge an Verteilgut je Zeiteinheit steuer- und/oder regelbaren Dosier- und/oder Fördereinrichtung (22) gespeist werden, und mit einer Regeleinrichtung, die die Dosier- und/oder Fördereinrichtung (22) innerhalb eines definierbaren und/oder veränderlichen Betriebsbereiches zwischen einer unteren Grenzfördermenge und einer oberen Grenzfördermenge betreibt,
- wobei eine Gesamtfördermenge der Dosier- und/oder Fördereinrichtung (22) bei allen aktivierten Reiheneinheiten (34) kleiner oder in etwa gleich der oberen Grenzfördermenge ist,
- und wobei die Regeleinrichtung die von der steuer- und/oder regelbaren Dosier- und/oder Fördereinrichtung (22) geförderte Fördermenge an Verteilgut mit der und/oder in Abhängigkeit von der jeweiligen Anzahl an aktivierten oder deaktivierten Reiheneinheiten (34) variiert,
wobei eine Mindestanzahl an zu aktivierenden und/oder aktiviert bleibenden Reiheneinheiten (34) auf den Betriebsbereich der Dosier- und/oder Fördereinrichtung (22) und/oder auf die jeweilige untere Grenzfördermenge abgestimmt ist, und die Regeleinrichtung bei einer Erreichung und/oder Unterschreitung der unteren Grenzfördermenge entweder alle verbleibenden Reiheneinheiten (34) mitsamt der Dosier- und/oder Fördereinrichtung (22) abschaltet oder die für eine Erreichung oder Aufrechterhaltung der unteren Grenzfördermenge erforderliche Mindestzahl an Reiheneinheiten (34) aktiviert hält, wobei mittels eines in der Regeleinrichtung hinterlegten Regelungsprogramms jeweils definiert wird, ob für einen optimalen Drehzahlbereich eines Zellenrotors der Dosier- und/oder Fördereinrichtung (22) jeweils einzelne Reiheneinheiten (34) geschaltet werden können oder ob jeweils eine gruppenweise Schaltung der Reiheneinheiten (34) erfolgen soll.

10. Landwirtschaftliche Verteilmaschine nach Anspruch 9, bei dem bei jeder Variation der mittels der steuer- und/oder regelbaren Dosier- und/oder Fördereinrichtung (22) erhöhbaren oder reduzierbaren Fördermenge an Verteilgut im Zusammenhang mit einer Veränderung der jeweiligen Anzahl an aktivierten bzw. deaktivierten Reiheneinheiten (34) die untere Grenzfördermenge einen Mindestwert größer als Null aufweist.

11. Landwirtschaftliche Verteilmaschine nach Anspruch 9 oder 10, bei dem die Variation der mittels der steuer- und/oder regelbaren Dosier- und/oder Fördereinrichtung (22) erhöhbaren oder reduzierbaren Fördermenge an Verteilgut im Zusammenhang mit einer Veränderung und/oder einem Austausch eines der Dosier- und/oder Fördereinrichtung (22) zugeordneten rotierenden Dosierorgans erfolgt.

12. Landwirtschaftliche Verteilmaschine nach Anspruch 11, bei dem eine Veränderung und/oder ein Austausch des in der Dosier- und/oder Fördereinrichtung (22) rotierenden Dosierorgans mit einer Veränderung der unteren Grenzfördermenge und/oder der oberen Grenzfördermenge im Zusammenhang steht.

13. Landwirtschaftliche Verteilmaschine nach einem der Ansprüche 9 bis 12, bei dem das rotierende Dosierorgan einen elektromotorischen, einen hydraulischen, einen pneumatischen oder anderen Antrieb aufweist.

14. Landwirtschaftliche Verteilmaschine nach einem der Ansprüche 9 bis 13, bei dem während einer Feldfahrt der landwirtschaftlichen Verteilmaschine (8) Daten mit Ortskoordinaten, insbesondere GPS-Daten berücksichtigt und ausgewertet werden, wobei in Abhängigkeit der verarbeiteten Ortskoordinaten bzw. GPS-Daten in Abhängigkeit von der jeweiligen Fahrsituation und/oder der jeweiligen Position auf einem zu bearbeitenden Areal einzelne Reiheneinheiten (34) oder Gruppen von Reiheneinheiten (34) aktiviert bzw. deaktiviert werden.

## Claims

1. A method for single row switching and/or group switching of an agricultural distribution machine (8), which has a plurality of row units (34), which are activable and/or deactivable individually and/or in groups for the controlled spreading of granular distribution goods, such as seeds (20) or fertilisers, which row units (34) are, for the spreading of granular distribution goods, in each instance supplied from at least one storage hopper (18) with distribution goods contained therein by means of a metering device and/or delivery device (22), which is disposed between the at least one storage hopper (18) and the row units (34), and which is controllable and/or regulatable with regard to its delivery rate of distribution goods per time unit,
- wherein the metering device and/or delivery device (22) operates within a definable and/or variable operating range between a lower delivery rate limit and an upper delivery rate limit,
- wherein a total delivery rate of the metering device and/or delivery device (22) is less than or approximately equal to the upper delivery rate limit for all activated row units (34),
- and wherein the delivery rate of distribution goods delivered by the controllable and/or regulatable metering device and/or delivery device (22) is or can be increased or decreased depending on the particular number of activated or deactivated row units (34),
wherein a minimum number of row units (34) to be activated and/or remaining activated is aligned with the operating range of the metering device and/or delivery device (22) and/or with the particular lower delivery rate limit, and, upon the lower delivery rate limit being reached and/or fallen below of, either all remaining row units (34) are switched off together with the metering device and/or delivery device (22) or the minimum number of row units (34) required for reaching or maintaining the lower delivery rate limit remain activated, and it is in each instance defined by means of a regulation program stored in a regulating device if in each instance individual row units (34) can be switched for an optimum speed range of a cell rotor of the metering device and/or delivery device (22) or if in each instance a groupwise switching of the row units (34) should be carried out.

2. The method according to claim 1, in which the lower delivery rate limit assumes a minimum value greater than zero with each variation of the distribution goods delivery rate, which is increasable or decreasable by means of the controllable and/or regulatable metering device and/or delivery device (22), in connection with a change of the particular number of activated or, as applicable, deactivated row units (34).

3. The method according to claim 1 or 2, in which the variation of the distribution goods delivery rate, which is increasable or decreasable by means of the controllable and/or regulatable metering device and/or delivery device (22), is carried out in connection with a change and/or an exchange of a rotating metering organ assigned to the metering device and/or delivery device (22).

4. The method according to claim 3, in which the lower delivery rate limit and/or the upper delivery rate limit is/are changed by a change and/or by an exchange of the metering organ rotating in the metering device and/or delivery device (22).

5. The method according to one of the claims 1 to 4, in which a reaching or a falling below of the lower delivery rate limit is detected with a plurality of row units (34) being deactivated and prior to the deactivation of further row units (34), and in which all remaining active row units (34) are deactivated together when the lower delivery rate limit is fallen below of.

6. The method according to one of the claims 1 to 5, in which a reaching or an exceeding of the lower delivery rate limit is detected for all deactivated row units (34) and prior to the activation of individual or of a plurality of row units (34), and in which a minimum number of row units (34) are activated groupwise together such that the lower delivery rate limit is exceeded.

7. The method according to one of the previous claims, in which an optically and/or acoustically identifiable notice to exchange a metering organ is output in the instance of a plurality of preceding control commands to activate and/or deactivate individual or a plurality of row units (34) being refused and/or executed in a modified form due to the currently installed metering organ falling below the lower delivery rate limit.

8. The method according to one of the previous claims, in which data with location coordinates, in particular GPS data, are taken into account and evaluated during a field drive of the agricultural distribution machine (8), wherein, depending on the processed location coordinates or GPS data, as applicable, individual row units (34) or groups of row units (34) are activated or deactivated, as applicable, depending on the particular driving situation and/or on the particular position in an area to be tilled.

9. An agricultural distribution machine (8), with a plurality of row units (34), which are activable and/or deactivable individually and/or in groups for the controlled spreading of granular distribution goods, such as seeds (20) or fertilisers, which row units (34) are, for the spreading of granular distribution goods, in each instance supplied from at least one storage hopper (18) with distribution goods contained therein by means of a metering device and/or delivery device (22), which is disposed between the at least one storage hopper (18) and the row units (34), and which is controllable and/or regulatable with regard to its delivery rate of distribution goods per time unit, and with a regulating device, which operates the metering device and/or delivery device (22) within a definable and/or variable operating range between a lower delivery rate limit and an upper delivery rate limit,
- wherein a total delivery rate of the metering device and/or delivery device (22) is less than or approximately equal to the upper delivery rate limit for all activated row units (34),
- and wherein the regulating device varies the delivery rate of distribution goods delivered by the controllable and/or regulatable metering device and/or delivery device (22) with and/or depending on the particular number of activated or deactivated row units (34),
wherein a minimum number of row units (34) to be activated and/or remaining activated is aligned with the operating range of the metering device and/or delivery device (22) and/or with the particular lower delivery rate limit, and, upon the lower delivery rate limit being reached and/or fallen below of, the regulating device either switches off all remaining row units (34) together with the metering device and/or delivery device (22) or keeps the minimum number of row units (34) required for reaching or maintaining the lower delivery rate limit activated, wherein it is in each instance defined by means of a regulation program stored in a regulating device if in each instance individual row units (34) can be switched for an optimum speed range of a cell rotor of the metering device and/or delivery device (22) or if in each instance a groupwise switching of the row units (34) should be carried out.

10. The agricultural distribution machine according to claim 9, in which the lower delivery rate limit has a minimum value greater than zero with each variation of the distribution goods delivery rate, which is increasable or decreasable by means of the controllable and/or regulatable metering device and/or delivery device (22), in connection with a change of the particular number of activated or, as applicable, deactivated row units (34).

11. The agricultural distribution machine according to claim 9 or 10, in which the variation of the distribution goods delivery rate, which is increasable or decreasable by means of the controllable and/or regulatable metering device and/or delivery device (22), is carried out in connection with a change and/or an exchange of a rotating metering organ assigned to the metering device and/or delivery device (22).

12. The agricultural distribution machine according to claim 11, in which a change and/or an exchange of the metering organ rotating in the metering device and/or delivery device (22) is associated with a change of the lower delivery rate limit and/or of the upper delivery rate limit.

13. The agricultural distribution machine according to one of the claims 9 to 12, in which the rotating metering organ has an electromotive, an hydraulic, a pneumatic, or another type of drive.

14. The agricultural distribution machine according to one of the claims 9 to 13, in which data with location coordinates, in particular GPS data, are taken into account and evaluated during a field drive of the agricultural distribution machine (8), wherein, depending on the processed location coordinates or GPS data, as applicable, individual row units (34) or groups of row units (34) are activated or deactivated, as applicable, depending on the particular driving situation and/or on the particular position in an area to be tilled.

## Revendications

1. Procédé de commande de rangée simple et/ou groupée d'un épandeur agricole (8) qui présente une pluralité d'unités de rangée (34) susceptibles d'être activées et/ou désactivées individuellement et/ou en groupe pour l'épandage contrôlé de matériau d'épandage sous forme de granulés, tel que des semences (20) ou de l'engrais, lesdites unités de rangée (34) destinées à l'épandage dudit matériau d'épandage sous forme de granulés étant chacune alimentées par au moins un réservoir (18) contenant du matériau d'épandage, à l'aide d'un dispositif de dosage et/ou de convoyage (22) agencé entre ledit au moins un réservoir (18) et lesdites unités de rangée (34), et susceptible d'être commandé et/ou régulé en ce qui concerne sa quantité de convoyage en matériau d'épandage par unité temporelle,
- ledit dispositif de dosage et/ou de convoyage (22) travaillant dans les limites d'une plage de fonctionnement définissable et/ou modifiable entre une limite inférieure de quantité de convoyage et une limite supérieure de quantité de convoyage,
- une quantité de convoyage totale du dispositif de dosage et/ou de convoyage (22) étant pour toutes les unités de rangée (34) activées inférieure ou approximativement égale à la limite supérieure de la quantité de convoyage,
- et la quantité de convoyage en matériau d'épandage convoyée par le dispositif de dosage et/ou de convoyage (22) commandable et/ou régulable étant ou pouvant être augmentée ou réduite en fonction du nombre respectif d'unités de rangée (34) activées ou désactivées,
un nombre minimum d'unités de rangée (34) à activer et/ou restant activées étant adapté à la plage de fonctionnement du dispositif de dosage et/ou de convoyage (22) et/ou à la limite inférieure respective de la quantité de convoyage,
et lorsque la limite inférieure de la quantité de convoyage est atteinte et/ou reste supérieure à la quantité effective, soit toutes les unités de rangée (34) restantes ainsi que le dispositif de dosage et/ou de convoyage (22) sont éteints, soit le nombre minimum d'unités de rangée (34) nécessaire pour atteindre ou maintenir la limite inférieure de la quantité de convoyage reste activé, et un programme de régulation intégré à un dispositif de régulation permet de définir respectivement si, pour une plage de vitesse optimale d'un rotor cellulaire du dispositif de dosage et/ou de convoyage (22), il est possible de commander des unités de rangée simples (34) respectives ou s'il faut commander respectivement des unités de rangée (34) groupées.

2. Procédé selon la revendication 1, dans lequel à chaque variation de la quantité de convoyage en matériau d'épandage, susceptible d'être augmentée ou réduite au moyen du dispositif de dosage et/ou de convoyage (22) commandable et/ou régulable, la limite inférieure de la quantité de convoyage prend une valeur minimum plus grande que zéro lorsque le nombre respectif d'unités de rangée (34) activées ou désactivées change.

3. Procédé selon la revendication 1 ou 2, dans lequel la variation de la quantité de convoyage en matériau d'épandage susceptible d'être augmentée ou réduite au moyen du dispositif de dosage et/ou de convoyage (22) commandable et/ou régulable s'effectue dans le cadre d'une modification et/ou d'un remplacement d'un organe de dosage rotatif associé au dispositif de dosage et/ou de convoyage (22).

4. Procédé selon la revendication 3, dans lequel une modification et/ou un remplacement de l'organe de dosage en rotation dans le dispositif de dosage et/ou de convoyage (22) entraîne une modification de la limite inférieure de la quantité de convoyage et/ou de la limite supérieure de la quantité de convoyage.

5. Procédé selon l'une quelconque des revendications 1 à 4, dans lequel lorsque plusieurs unités de rangée (34) sont désactivées et avant que d'autres unités de rangée (34) ne soient désactivées, un fait d'atteindre ou de passer en-dessous de la limite inférieure de la quantité de convoyage est détecté, et dans lequel toutes les autres unités de rangée (34) actives restantes sont désactivées collectivement lorsque la quantité effective passe en-dessous de la limite inférieure de la quantité de convoyage.

6. Procédé selon l'une quelconque des revendications 1 à 5, dans lequel lorsque toutes les unités de rangée (34) sont désactivées et avant que certaines ou plusieurs unités de rangée (34) ne soient activées, un fait d'atteindre ou de dépasser la limite inférieure de la quantité de convoyage est détectée, et dans lequel un nombre minimum d'unités de rangée (34) sont activées collectivement en groupe de sorte à dépasser la limite inférieure de la quantité de convoyage.

7. Procédé selon l'une quelconque des revendications précédentes, dans lequel dans le cas de plusieurs ordres de commande précédents pour activer et/ou désactiver certaines ou plusieurs unités de rangée (34) qui, à cause d'un dépassement par le bas de la limite inférieure de la quantité de convoyage par un organe de dosage actuellement monté, ont été rejetés et/ou exécutés sous une forme modifiée, un signal optique et/ou acoustique identifiable est émis pour remplacer l'organe de dosage.

8. Procédé selon l'une quelconque des revendications précédentes, dans lequel pendant que l'épandeur agricole (8) est en marche sur le terrain, des données avec des coordonnées géographiques, notamment des données de GPS sont prises en compte et analysées, des unités de rangée (34) individuelles ou des groupes d'unités de rangée (34) étant activés ou désactivés en fonction des coordonnées géographiques ou des données de GPS traitées en fonction de la situation de marche respective et/ou de la position respective sur une zone à traiter.

9. Épandeur agricole (8) doté d'une pluralité d'unités de rangée (34) susceptibles d'être activées et/ou désactivées individuellement et/ou en groupe pour l'épandage contrôlé de matériau d'épandage sous forme de granulés, tels que des semences (20) ou de l'engrais, lesdites unités de rangée (34) destinées à l'épandage dudit matériau d'épandage sous forme de granulés étant chacune alimentées par au moins un réservoir (18) contenant du matériau d'épandage, à l'aide d'un dispositif de dosage et/ou de convoyage (22) agencé entre ledit au moins un réservoir (18) et les unités de rangée (34) et susceptible d'être commandé et/ou régulé en ce qui concerne sa quantité de convoyage en matériau d'épandage par unité de temps et doté d'un dispositif de régulation qui opère le dispositif de dosage et/ou de convoyage (22) dans les limites d'une plage de fonctionnement définissable et/ou modifiable entre une limite inférieure de quantité de convoyage et une limite supérieure de quantité de convoyage,
- une quantité de convoyage totale du dispositif de dosage et/ou de convoyage (22) étant pour toutes les unités de rangée (34) activées inférieure ou approximativement égale à la limite supérieure de la quantité de convoyage,
- et le dispositif de régulation faisant varier la quantité de convoyage en matériau d'épandage, convoyée par le dispositif de dosage et/ou de convoyage (22) commandable et/ou régulable, avec ou en fonction du nombre respectif d'unités de rangée (34) activées ou désactivées,
un nombre minimum d'unités de rangée (34) à activer et/ou restant activées étant adapté à la plage de fonctionnement du dispositif de dosage et/ou de convoyage (22) et/ou à la limite inférieure respective de la quantité de convoyage,
et le dispositif de régulation, si la limite inférieure de la quantité de convoyage est atteinte et/ou reste supérieure à la quantité effective, soit éteint toutes les unités de rangée (34) restantes ainsi que le dispositif de dosage et/ou de convoyage (22), soit maintient activé le nombre minimum d'unités de rangée (34) nécessaire pour atteindre ou maintenir la limite inférieure de la quantité de convoyage, et un programme de régulation intégré au dispositif de régulation permettant de définir respectivement si, pour une plage de vitesse optimale d'un rotor cellulaire du dispositif de dosage et/ou de convoyage (22), il est possible de commander des unités de rangée individuelles (34) respectives ou s'il faut commander respectivement des unités de rangée (34) groupées.

10. Épandeur agricole selon la revendication 9, dans lequel à chaque variation de la quantité de convoyage en matériau d'épandage, susceptible d'être augmentée ou réduite au moyen du dispositif de dosage et/ou de convoyage (22) commandable ou régulable, la limite inférieure de la quantité de convoyage présente une valeur minimum plus grande que zéro lorsque le nombre respectif des unités de rangée (34) activées ou désactivées varie.

11. Épandeur agricole selon la revendication 9 ou 10, dans lequel la variation de la quantité de convoyage en matériau d'épandage susceptible d'être augmentée ou réduite au moyen du dispositif de dosage et/ou de convoyage (22) commandable et/ou régulable s'effectue dans le cadre d'une modification et/ou d'un remplacement d'un organe de dosage rotatif associé au dispositif de dosage et/ou de convoyage (22).

12. Épandeur agricole selon la revendication 11, dans lequel une modification et/ou un remplacement de l'organe de dosage en rotation dans le dispositif de dosage et/ou de convoyage (22) est en rapport avec une modification de la limite inférieure de la quantité de convoyage et/ou de la limite supérieure de la quantité de convoyage.

13. Épandeur agricole selon l'une quelconque des revendications 9 à 12, dans lequel l'organe de dosage en rotation présente un entraînement de type électromoteur, hydraulique, pneumatique ou autre.

14. Épandeur agricole selon l'une quelconque des revendications 9 à 13, dans lequel pendant que l'épandeur agricole (8) est en marche sur le terrain, des données avec des coordonnées géographiques, notamment des données de GPS, sont prises en compte et analysées, des unités de rangée (34) individuelles ou des groupes d'unités de rangée (34) étant activées ou désactivées en fonction des coordonnées géographiques ou des données de GPS traitées en fonction de la situation de marche respective et/ou de la position respective sur une zone à traiter.
